(19) **Europäisches Patentamt**

**European Patent Office**

**Office européen des brevets**

(11) **EP 1 013 616 A1**

(12) **EUROPEAN PATENT APPLICATION**

(43) Date of publication:
**28.06.2000 Bulletin 2000/26**

(21) Application number: **98310563.6**

(22) Date of filing: **22.12.1998**

(51) Int. Cl.[7]: **C03B 7/04**, C03B 7/07,
C03B 37/05, C03B 37/08,
C03B 5/18, C03B 5/187,
C03B 5/027

(84) Designated Contracting States:
**AT BE CH CY DE DK ES FI FR GB GR IE IT LI LU MC NL PT SE**
Designated Extension States:
**AL LT LV MK RO SI**

(71) Applicant:
**Rockwool International A/S
DK-2640 Hedehusene (DK)**

(72) Inventor:
**The designation of the inventor has not yet been filed**

(74) Representative:
**Lawrence, Peter Robin Broughton
GILL JENNINGS & EVERY,
Broadgate House,
7 Eldon Street
London EC2M 7LH (GB)**

(54) **Method for producing mineral wool**

(57)    A process is provided for the production of mineral wool (vitreous fibres) comprising forming a mineral melt (1) in a furnace from mineral materials, removing melt from the furnace and causing it to flow along a melt conduit, to an outlet, and from there to an application point at which it is applied to a rotor and formed into fibres, and in the process at least part of the melt conduit is an enclosed conduit (1) which rotates about an axis of rotation (2) which is parallel to its longitudinal axis as the melt is flowing along the conduit. Apparatus is also described which is suitable for carrying out such a process. This comprises a furnace, at least one rotatable rotor, an outlet and an application point and a melt conduit leading from the exit of the furnace to the outlet and in the apparatus at least part of the melt conduit is an enclosed conduit (1) which is rotatable about an axis (2) parallel to its longitudinal axis.

Fig.1.

EP 1 013 616 A1

## Description

The present invention relates to methods for the production of man-made vitreous fibre (MMVF) wool and apparatus for use in such methods.

It is well known to produce MMVF wool, also known as mineral wool, by producing a mineral melt and fiberising the melt to form fibres. Various types of wool can be made by such methods, including the types generally described as stone wool, slag wool and glass wool.

In such methods a mineral melt is formed in a furnace from solid raw mineral material and poured into or onto a rapidly spinning rotor, from which it is flung as fibres, collected and formed into the desired end product.

Various types of furnace are known for producing the mineral melt. One such furnace is known as a tank furnace and is commonly used for the melting of raw materials for the production of glass wool. The structure of such furnaces is well known. The retention time of the melt in a furnace of this type is usually long, eg 20 to 30 hours, and use of a tank furnace generally results in a highly homogeneous glass melt.

Electric furnaces which can be used for the production of stone wool melts include immersed electric arc furnaces having three graphite electrodes in direct contact with a bath of liquid mineral melt. Heating is carried out by passing electric current through the melt between the electrodes. As solid raw materials are added to the bath of liquid mineral melt, they are melted by the heat already in the mineral melt. The retention time of the melt in a furnace of this type depends on the design of the furnace and on the depth of the bath of liquid mineral melt. However, in practice, the retention time in an electric furnace is normally from 2 to 10 hours. This type of furnace may be used for the production of stone wool.

Another commonly used furnace for the production of stone wool melts is a cupola furnace, which comprises a shaft which holds coke and the solid raw materials which are to form the mineral melt. As the raw materials melt, a pool of mineral melt is collected at the bottom of the shaft and melt is tapped from this pool. In furnaces of this type, mineral melt is generally retained in the pool for only about 15 minutes.

As a result of the melting system and the short retention time, mineral melt exiting a cupola furnace can tend to be less homogeneous, in terms of temperature throughout the melt, than mineral melt exiting an electric furnace.

For all types of furnace it is not generally possible to pass the melt from the furnace directly into or onto the spinning rotor. It is instead common practice to provide a gutter or trough, which is normally open, leading from the exit of the furnace to the point at which the mineral melt is to be poured onto the rotor. During the time required for the melt to pass along this gutter the melt will cool. This again can give rise to inhomogeneity in the melt which is poured into or onto the spinning rotor.

The disadvantages of inhomogeneity of the melt include the fact that the resulting fiberised material tends to contain a higher amount of non-fiberised shot materials, which reduce the quality of the final product and reduce the yield of fibres.

Such problems are particularly acute in the case of melts of the type used to produce stone wool (stone melts), in particular those which have a significant content of FeO, which can be 5% or more. Melts of this type do not have high heat conductivity (due to the fact that they are highly opaque to infrared radiation), and inhomogeneity is consequently more likely to occur than in melts which are less opaque to infrared radiation and thus have higher heat conductivity, such as glass melts.

It is known, in particular in the processing of glass melts, to provide heating above the melt in the gutter which is used to transfer the melt from the furnace to the position from which it is poured into or onto the rotor. This can be done for instance with the use of gas burners. It is also known to provide insulation for the open gutter. These measures are intended to reduce heat loss from the melt and thus reduce the incidence of inhomogeneity in the melt which is poured into or onto the rotor. However, these systems are appropriate primarily when the melt transferred by the open gutter is already homogeneous. They can effectively maintain homogeneity to a reasonable extent. However, melts which have a tendency to be inhomogeneous when they enter the gutter tend to remain inhomogeneous as they pass through the gutter and up to the point from which they are poured into or onto the rotor. Thus systems of this sort do not provide an improvement in the homogeneity of melts which tend to be inhomogeneous, such as stone melts.

It is desired in the invention to provide a system which can improve the homogeneity of melts exiting the furnace before they are poured onto the rotor, in particular melts hitherto felt to be difficult to homogenise, such as stone melts and those with significant iron content. It would also be desirable to provide improved systems for maintaining homogeneity in melts exiting electric furnaces, which tend to be homogeneous when they exit the furnace.

According to the invention we provide a process for the production of MMV fibres comprising

melting mineral materials in a furnace to form a mineral melt, removing melt from the furnace through a furnace exit, causing the melt to flow along a melt conduit to an outlet and causing the melt to flow from the outlet to an application point, and at the application point applying the melt to a rotor and forming fibres from the melt, characterised in that at least part of the melt conduit is an enclosed conduit which rotates about an axis of rotation which is parallel to its longitudinal axis as the melt flows along the conduit.

We also provide, in a second aspect of the invention, apparatus for the production of MMV fibres comprising

a furnace, in which raw mineral material can be melted to form a mineral melt, and having a furnace exit
at least one rotatable rotor,
an outlet point, from which melt can be led to an application point, from which mineral melt can be applied to the rotatable rotor,
and a melt conduit which leads from the furnace exit to the outlet point,
characterised in that at least part of the melt conduit is an enclosed conduit which is rotatable about an axis of rotation which is parallel to its longitudinal axis.

The combination of an enclosed conduit and rotation of this conduit are particularly advantageous in maintaining homogeneity of melts which are already homogeneous when they exit the furnace and can even increase homogeneity of melts which are not sufficiently homogeneous as they exit the furnace.

In the process of the invention mineral melt is led from the furnace exit along a melt conduit to the outlet point and from there to the application point, at which it is applied to a rotor. The melt conduit has an inlet end, described herein as the upper end, and an outlet end, described herein as the lower end (at the outlet point). Melt enters the conduit at the upper end and leaves it at the lower end.

At least part of the melt conduit is enclosed and rotates about an axis parallel to its longitudinal axis. Thus in the invention it is possible that part of the melt conduit is not enclosed. For instance, it may have a section which is an open gutter of the well known type. Parts of the conduit may be enclosed but non-rotating. Any part of the melt conduit which rotates must be enclosed. However, preferably the whole of the melt conduit leading from the furnace exit to the outlet point is enclosed and rotates. It will be seen that discussion below in connection with the rotating melt conduit is equally applicable to systems in which only part of the conduit is enclosed and rotates. In these cases all features of the rotating melt conduit can be applied to the part of the conduit which rotates.

Generally the melt conduit is substantially straight. The mineral melt passes along the inside of the enclosed conduit, which is preferably in the form of a hollow tube. The melt conduit may have any appropriate cross-section, for instance rectangular or elliptical, but preferably it has a substantially circular cross-section. Preferably then the melt conduit is substantially cylindrical.

The longitudinal direction is the direction along which melt would flow in the conduit if the conduit were stationary. The longitudinal axis of the melt conduit will thus pass along the centre line of the melt conduit in this direction. The dimensions of the melt conduit are usually such that the longitudinal dimension (ie length) is greater than the transverse dimension (ie width of cross-section). Thus it is preferably in the form of a cylinder having length greater than its diameter. However, an alternative is that the melt conduit has a transverse dimension greater than its longitudinal dimension. Preferably the ratio of the longitudinal dimension to the transverse dimension is at least 3:1, preferably at least 4:1, more preferably at least 5:1 and may even be 7:1 or greater. It may be up to for instance 15:1 but is generally not more than 10:1.

The length of the conduit is normally from 0.5 to 10 metres, preferably 0.5 to 5 metres, for instance around 1.5 metres. The invention allows modification of a standard apparatus for production of mineral wool by the removal of the existing melt conduit (which will normally be an open gutter) and insertion of a rotatable enclosed melt conduit. This produces an apparatus of the invention and allows the operation of the process of the invention.

The melt conduit is usually placed at an incline so that melt flows downwardly under gravity from the furnace exit to the outlet point along the melt conduit between the upper and lower ends. It is usually placed at an angle of from 1 to 20° with the horizontal, preferably 2 to 5° with the horizontal.

Particular embodiments of the rotatable enclosed melt conduit can increase the retention time of the melt in the enclosed conduit. This is especially advantageous when heating is applied to the melt conduit and/or to the melt in the melt conduit, as discussed in detail below. In general it is convenient for the upper and lower ends of the melt conduit to be fully open, but in these embodiments at least the lower end, and if desired also the upper end, of the melt conduit is partially closed. Thus the lower end has an outlet whose diameter is smaller than the diameter of the conduit. In these embodiments the melt does not flow directly out of the outlet, but instead a reservoir of mineral melt is maintained in the conduit as it rotates.

Preferably the diameter of the outlet is less than 70%, preferably less than 50%, and more preferably less than 40% of the diameter of the conduit. It may even be less than 30% of the diameter of the conduit, but the diameter of the outlet should not be so small that it prevents the melt flowing through the conduit or is liable to become blocked, and is generally at least 10% or 20% of the diameter of the conduit. Preferably the outlet is coaxial with the conduit itself and is thus positioned on the central longitudinal axis of the conduit.

Further preferred embodiments of the melt conduit include the provision of agitation means in the walls of the conduit. These may for instance be protrusions such as vanes which extend into the conduit. Preferably each vane extends longitudinally along the length of the conduit, preferably as an integral vane, but the vanes may be provided in sections. As the conduit rotates the melt flows over the protrusions and its agitation is increased.

The melt conduit may be made of any suitable material. Such materials include refractory materials. Preferably the conduit is formed at least partially from thermally insulating material, to aid in reducing heat loss from the melt as it flows along the melt conduit. Generally as many of the components of the conduit as possible should be formed of thermally insulating material.

A preferred conduit is constructed so as to have outer walls provided with a lining. The outer walls may be formed from structural material such as steel. The lining insulates the outer walls from the high temperature region inside the conduit. A preferred lining comprises two layers. The outer layer, which contacts the outer walls, is formed from refractory insulation material. It is generally an electrical insulator and a thermal insulator. Electrical insulators as defined herein are materials having specific resistance 1,000 ohm.cm or greater at 1,100°C. Suitable materials for the outer layer include chamotte (fireclay), ceramic fibres such as kaolin wool, castable insulating cement (which has the advantage of being particularly easy to mould) and high alumina materials. The inner layer, which contacts the melt, is also a thermal insulator and is preferably resistant to corrosion by the melt. Advantageously, the inner layer is an electrical conductor. This is especially useful when electrical heating of the melt is employed (see below). Suitable materials include chromium corundum refractory materials such as that sold under the name Supral RK30.

At least a part of the melt conduit is rotatable and in the process this part is rotated as the mineral melt is passing along it. The rotation is about an axis of rotation which is parallel to the longitudinal axis (ie the central axis in the longitudinal direction) of the melt conduit. This axis of rotation may for instance pass along one of the walls of the conduit but is usually situated within the conduit and the axis of rotation is preferably the central longitudinal axis itself, especially if the conduit is substantially cylindrical (in which case it will be the central longitudinal axis of the cylinder).

The rotation may be oscillatory rotation. Preferably however it is continuous rotation in a single chosen direction. Preferred speeds of rotation are 1 rpm to 20 rpm, preferably 2 to 10 rpm, eg about 6 rpm. The direction of continuous rotation may be changed periodically, eg once a day or once a week. Oscillatory rotation is useful in combination with a system in which agitation means such as protrusions are provided, since any wearing of the protrusions by the melt will be symmetrical. Alternatively, continuous rotation in which the direction of rotation is periodically changed may be used to minimise non-symmetrical wearing.

As the melt conduit rotates the melt inside the conduit is agitated and its homogeneity can be increased, thus improving the quality of the melt which is applied to the rotor.

It is highly preferred that heating is applied to the melt conduit and/or to the melt as the melt passes along the melt conduit. The walls of the melt conduit may be heated. This heat is transferred to the melt and aids in reducing the magnitude of any temperature gradient within the melt and consequent heat loss. Heating of the walls of the melt conduit is particularly advantageous before and during start-up when the first mineral melt begins to pass along the melt conduit.

A preferred method is electrical resistance heating in the melt itself by electrical conduction through the melt in the melt conduit. In such a system electrical contacts are provided in the walls of the melt conduit. Electric current may be caused to flow through the melt as part of an external circuit. This is possible because mineral melt, although an insulator when solid, is electrically conductive in the molten form. The flow of electric current through the melt results in resistance heating of the melt. This is advantageous because heat is generated within the mineral melt itself. No transfer of heat, either from the walls of the melt conduit or from gas burners (see below) is required and efficiency of heating is improved.

Electrical contacts are required, which in a cylindrical melt conduit are usually provided as conducting rings. These should be formed of a material which has the highest degree of heat insulation and is highly electrically conductive. In particular it should have very low specific resistance. Suitable materials are those which have specific resistance measured at 1,100°C of from 0.001 to 0.5 ohm.cm, in particular 0.005 to 0.5 ohm.cm. Suitable materials include graphite and, preferably, silicon carbides having desirable specific resistance, in particular reaction-bonded silicon carbide.

Contacts with the external part of the circuit may be chosen appropriately, bearing in mind that the conduit rotates and with it the conducting rings. Suitable contacts include brushes such as carbon brushes.

It is preferred that the portion of the melt conduit which contacts the melt, for instance the inner layer in a two-layer lining as discussed above, is formed of a material which is an electrical conductor. In this case electrical current flows through the lining material and it is also heated by electrical resistance heating. This minimises heat loss from the melt and may even contribute to heating of the melt. Suitable materials for this part of the conduit have specific resistance below 1,000 ohm.cm, in particular below 500 ohm.cm, measured at 1,100°C. Particularly preferred materials have specific resistance at 1,100°C of from 100 to 200 ohm.cm and include the material Supral RK30 discussed above and other chromium corundum refractory materials.

Specific resistance is defined at 1,100°C but may even be lower in the environment of the melt conduit, since temperatures in the conduit may be as high as 1,400°C.

Any suitable electrical circuit may be devised so as to provide appropriate resistance heating in the melt and if desired the refractory lining of the conduit. AC or DC current may be used. In particular the current path may be split into three separate circuits in known manner, for instance using three phase alternating current. Suitable electrical systems may be used as described in DT2461700.

Alternative methods of heating the mineral melt include use of a gas burner which can be positioned along the longitudinal axis of the melt conduit at its inlet or outlet. This system may be used as an alternative to or in addition to heating of the walls or the melt by electrical conduction. In particular gas burners may be used in combination with electrical heating during start-up of the process. Initially, when the conduit is cold the lining is low in electrical conductivity and must be heated to a temperature of from 1,000 to 1,400°C in order to permit sufficient conduction. Gas burners are useful for this initial heating. Systems in which gas burners are not necessary at all times are preferred, because gas burners are less efficient than electrical heating. If gas burners are used, the usual precautions are required. However, it is preferred that these precautions are unnecessary and gas burners are preferably not used, except for start-up heating.

The combination of an enclosed conduit, rotation and heating gives particularly advantageous results. We find that the melt is physically agitated as it passes along the melt conduit, the rotation of the conduit lengthens the pathway taken by the melt as it passes from the furnace exit to the application point and the melt is heated as it passes along this lengthened pathway. All of these features aid in either preventing loss of homogeneity of the melt or increasing homogeneity of the melt.

Suitable means are provided for rotating the melt conduit. For instance means similar to those used for a rotary kiln may be used. Specifically, a substantially cylindrical melt conduit may be provided with two or more circumferential guide means which cooperate with external guide means such as rollers to maintain the conduit in position as it rotates. The rollers or other external guide means can be driven by for instance an electric motor and can be of adjustable rotational speed. Alternatively, a gearing mechanism may be used whereby a sprocket is provided around the periphery of the conduit. Rotation can be driven by standard gearing mechanisms.

The furnace may be any known furnace for the provision of mineral melt. It may be for instance a tank furnace or an electric furnace such as an immersed electric arc furnace as discussed above. We find however that the invention is particularly advantageous when the furnace is a shaft or cupola furnace. In such a furnace raw mineral material is passed into the furnace at the top and passes slowly down the shaft of the furnace as material at the bottom melts. The molten material forms a melt pool which is then removed from the furnace via the exit.

The melt conduit leads from an exit provided in the wall of the furnace to an outlet point. Melt is led from the outlet point to an application point at which mineral melt is applied to a rapidly rotating rotor. Melt may be led from the outlet point to the application point by standard means. Alternatively the outlet point may be at the application point and mineral melt is applied directly from the conduit to the rotor. Usually this is by pouring the melt into or onto the rotor so that it may be flung from the rotor as fibres. Any known rotor system for the production of MMV fibres can be used. Preferred systems include the "spinning cup" type of system in which the rotor is a cup which spins about a substantially vertical axis and is provided with holes through which melt is flung as fibres. Particularly preferred are systems in which the rotor rotates about a substantially horizontal axis and has a solid periphery from which the melt is flung as fibres. Such rotors are preferably arranged in a cascade formation, in which melt is poured onto a first (top) rotor. Part of the melt is flung from this rotor as fibres and part is flung onto a second, lower, rotor. Further melt is flung from the second rotor as fibres and the remainder is passed to a third, lower, rotor, from which more melt is flung as fibres. Such systems may include only three rotors but preferably they include four rotors.

Any of the features discussed above in connection with the process of the invention may be applied to the apparatus of the invention.

The process and apparatus of the invention may be used to produce any type of MMVF fibre such as glass, slag or stone wool. It is particularly preferred for the production of stone wool, especially stone wool having iron content (FeO and $Fe_2O_3$ both measured as FeO) of at least 3 wt.%, more preferably at least 5 wt.%. Iron content can be up to 15 wt.% but is generally not more than 12 wt.%, preferably not more than 10 wt.%. High iron mineral melts tend to have low heat conductivity (due to opaqueness to IR radiation) and the invention is particularly useful in addressing the inhomogeneity problems which arise with such melts.

Melts having boron content ($B_2O_3$) of not more than 1 wt.% can also usefully be used in the invention.

The products of the process of the invention and products made using the apparatus of the invention may be applied for any of the uses for which MMV fibres are known. The fibres are usually collected after formation as a web which is subjected to further treatments, for instance cross-lapping, compression and/or curing to produce a slab or batt. This can then be used as such, formed into shaped batts such as pipe sections or granulated. The materials may be used as horticultural growing media, for sound or heat insulation, fire prevention and protection and as fillers or reinforcements.

The invention will now be illustrated with reference to the accompanying drawings.

Figure 1 shows a perspective view of a preferred melt conduit for use in the invention.

Figure 2 shows a longitudinal cross-section through a proportion of such a preferred melt conduit.

Figures 3 and 4 show longitudinal cross-sections through alternative preferred melt conduits.

Figure 5 shows a transverse cross-section through a further preferred melt conduit.

Figure 6 shows a system for providing a split circuit.

Figure 7 shows a longitudinal cross-section through a preferred melt conduit having a two layer lining.

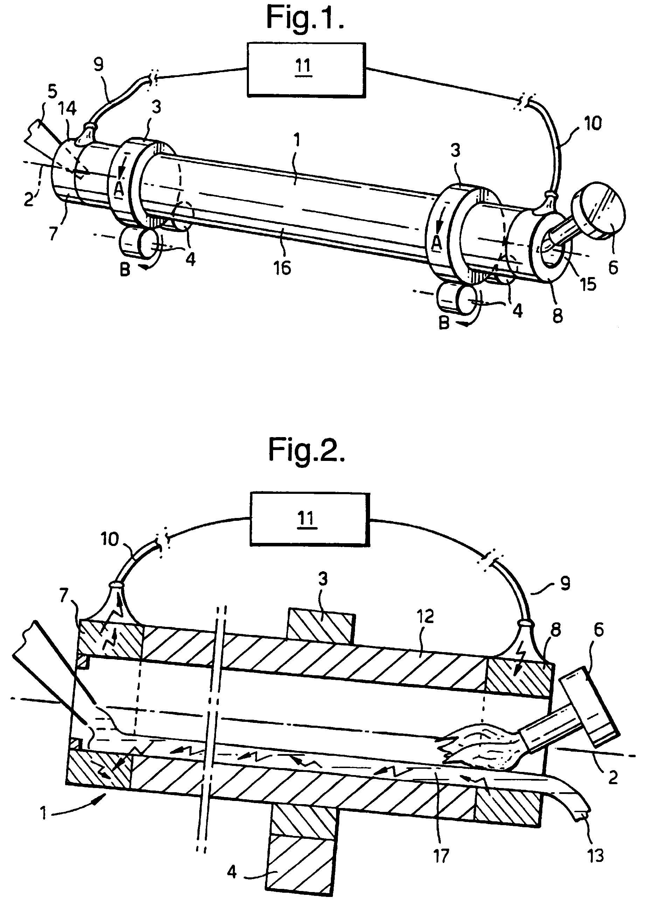

The melt conduit 1 is substantially cylindrical and is rotatable about its longitudinal axis, represented by dotted line 2 in Figures 1 and 2. It rotates continuously in direction A at a speed of 6 rpm. Circumferential guide rollers 3 are each supported by and cooperate with external guide rollers 4 which are driven by a rotor (not shown) and rotate in direction B as shown.

Melt 17 is fed into the upper end 14 of the melt conduit 1 by melt supply means 5 which leads from the furnace exit (not shown). The melt 17 then passes down the melt conduit 1, as the conduit rotates, in a helical pathway to the lower end 15. It is then poured from application point 13 onto the top rotor of a cascade system.

In this embodiment both the upper and lower ends 14 and 15 are fully open, so that the outlet has the same diameter as the conduit.

The melt conduit 1 is inclined at an angle of 3° to the horizontal. Its length is approximately 1.5 metres.

The melt 17 is heated during its passage along the melt conduit 1 as follows. The wall 16 of the melt conduit is made of steel having a lining formed from non-conductive refractory lining material 12. The regions 7 and 8 of the wall at the ends 14 and 15 (respectively) are formed from electrically conductive refractory material. These materials are connected by electrical connections 9 and 10 respectively to a power supply 11. Since the regions 7 and 8 rotate, the connections 9 and 10 may be non-fixed connections such as brushes. As potential difference is applied between contacts 9 and 10, current passes through the conductive refractory lining in region 7, through the melt 17 and into the conductive refractory lining in region 8. This induces resistance heating in the melt 17 as it passes along the melt conduit 1.

An additional heating means may alternatively or additionally be used. This is gas burner 6 which is positioned on the longitudinal axis 2 of the melt conduit 1 and heats the melt 17 by heat radiation and contact.

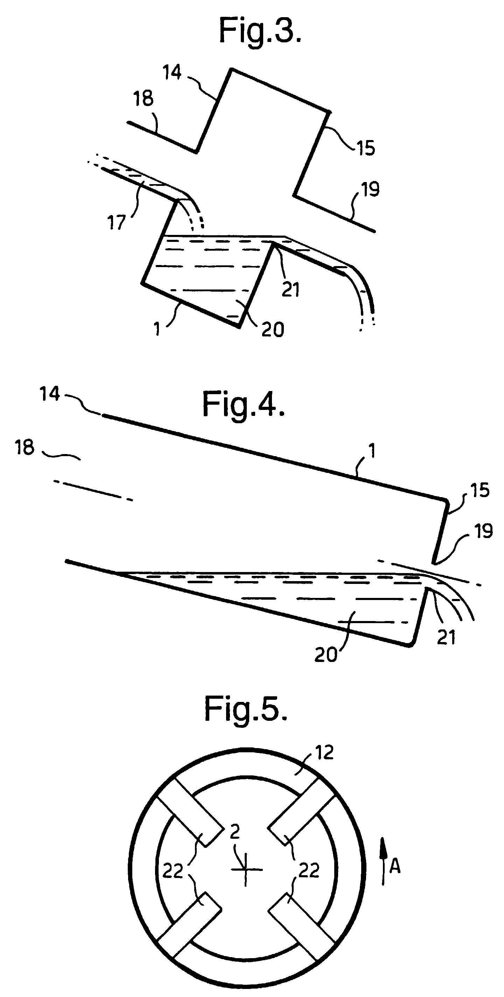

A schematic view of a melt conduit which can be used in place of conduit 1 in Figures 1 and 2 is shown in Figure 3. It can be seen that the conduit in this embodiment has a transverse dimension greater than its longitudinal dimension. It is provided with inlet 18 and outlet 19, which are both cylindrical. It can be seen that both the upper end 14 and the lower end 15 are partially closed so that the diameters of both the inlet and the outlet are substantially lower than the diameter of the conduit. As melt 17 passes through outlet 18 into the conduit 1 the incline of the conduit results in the formation of a reservoir 20 of melt. The melt exits the outlet 19 only when it reaches the vertical height of the lip 21 formed by the partial closure of the lower end 15. Thus melt is retained in the conduit for an extended period of time. This is particularly advantageous when it is subjected to heating as discussed above.

Figure 4 shows an alternative melt conduit 1. In this conduit upper end 14 is open and lower end 15 is partially closed. Inlet 18 has the same diameter as the conduit and outlet 19 is a simple orifice in the lower end 15 which has a diameter substantially less than that of the conduit. As in the embodiment of Figure 3, the incline of the conduit results in the formation of a reservoir 20 of melt which is agitated as the conduit rotates. This too passes out of outlet 19 when it reaches the vertical height of the lip 21.

Any of the conduits of Figures 1, 3 and 4 can be provided with a transverse cross-section as demonstrated schematically in Figure 5. In this embodiment the conduit rotates about its central longitudinal axis 2 in the direction A as shown. The wall of the melt conduit is formed primarily from non-conductive refractory lining material 12. Vanes 22 are provided which may be formed from the same or different material. These protrude into the interior of the melt conduit. It can be seen that as the conduit rotates these agitate the melt.

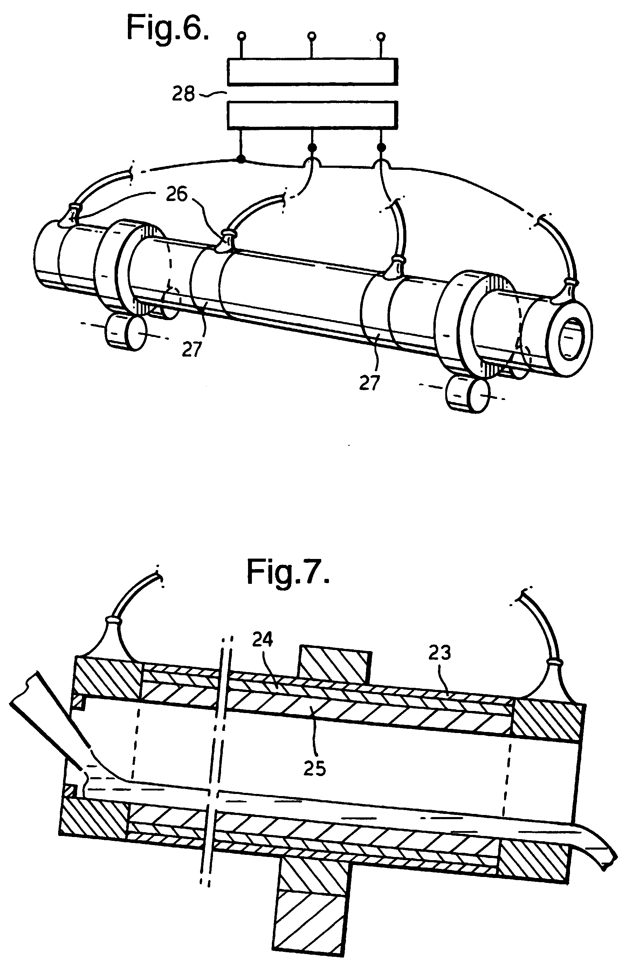

Figure 7 shows a cross-section through a preferred conduit. The conduit has an outer structural wall 23 formed of steel. The two-layer lining is formed from an outer layer 24 and an inner layer 25. Outer layer 24 is electrically and thermally insulating. Inner layer 25 is resistant to the corrosive effects of the melt, electrically conducting and thermally insulating.

Figure 6 demonstrates an example of a split electrical circuit suitable for electrically heating. Electrical contacts 26 are carbon brushes and contact conducting rings 27, which are formed from reaction-bonded silicon carbide. Current is supplied from a three-phase transformer 28 as shown to form 3 separate circuits.

Examples

A furnace is used to produce a stone wool melt having resistance as follows:

| Temperature | Specific Resistance |
|---|---|
| 1,500°C | 5 ohm.cm |
| 1,400°C | 10 ohm.cm |
| 1,300°C | 23 ohm.cm |
| 1,200°C | 68 ohm.cm |
| 1,100°C | 286 ohm.cm |
| 1,000°C | 2122 ohm.cm |

The temperature of the melt should therefore be at least 1,000°C, preferably 1,200°C, for electrical heating to be effective.

Suitable voltage for electrical heating can be calculated as follows:

Length of the conduit: 150 cm
Internal diameter of the conduit: 30 cm

The depth of the melt layer is dependent on the inclination of the tube. For a 5° inclination the depth of the melt layer is about 5 cm in the part of the conduit in which the melt is present.

This corresponds to a melt layer with a cross-section of 216 cm$^2$ over the full length of 150 cm. The resistance at 1,500°C would therefore be:

5 x 150/216 or about 3.5 ohm

The necessary current to reach a power level of 100 kW would then be:

$$P = RI^2$$

$$\therefore \ 100 = 5.5I^2$$

$$\therefore \ I = 170 \ Amp$$

Where

P is the power of 100 kW
R is the resistance of 3.5 ohm and
I is the calculated current.

Using a circuit as described in Figure 1, the voltage required is:

$$V = RI = 3,5 \times 170 = \underline{\textbf{591 Volts}}$$

In a system as shown in Figure 6, which corresponds with a balanced three-phase delta connection, the voltage required is approximately one third of this level, ie about **200 volts.**

**Claims**

1.  A process for the production of MMV fibres comprising

    melting mineral materials in a furnace to form a mineral melt (17), removing melt from the furnace through a furnace exit and causing the melt to flow along a melt conduit to an outlet and causing the melt to flow from the outlet to an application point, and at the application point applying the melt to a rotor and forming fibres from the melt,

characterised in that at least part of the melt conduit is an enclosed conduit (1) which rotates about an axis of rotation (2) which is parallel to its longitudinal axis as the melt flows along the conduit.

2. A process according to claim 1 in which the entirety of the melt conduit is formed by an enclosed conduit which is substantially cylindrical.

3. A process according to claim 1 or claim 2 in which the enclosed conduit rotates about its central longitudinal axis.

4. A process according to any preceding claim in which the enclosed conduit rotates continuously in a single direction.

5. A process according to claim 4 in which the enclosed conduit rotates at a rate of 1 to 20 rpm.

6. A process according to any preceding claim which comprises heating the melt and/or the enclosed conduit.

7. A process according to any preceding claim which comprises heating the melt by electrical resistance heating by passing an electric current from one region (7) of the wall (16) of the enclosed conduit to another (8) and through the melt as it passes along the melt conduit.

8. A process according to claim 7 in which the wall of the enclosed conduit is provided with an electrically conductive lining and electric current is passed from one region of the wall to another through the electrically conductive lining.

9. A process according to claim 7 or claim 8 in which the electric current is split into 3 circuits.

10. A process according to any preceding claim in which the enclosed conduit has an outer wall which is provided with a two-layer lining in which the outer layer is formed from thermally and electrically insulating material and the inner layer is formed from material which is resistant to corrosion by the melt and is electrically conducting.

11. A process according to any preceding claim in which the furnace is a cupola furnace.

12. A process according to any preceding claim in which the mineral melt has a content of iron oxide (measured as weight FeO) of at least 3 weight percent.

13. A process according to any preceding claim in which the melt has a content of boron measured as $B_2O_3$ of not more than 1 weight percent.

# Fig.1.

# Fig.2.

## Fig.3.

## Fig.4.

## Fig.5.

Fig.6.

Fig.7.

European Patent
Office

**EUROPEAN SEARCH REPORT**

Application Number

EP 98 31 0563

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 3 589 879 A (P.G.YANTSEV ET AL.) 29 June 1971 * the whole document * | 1 | C03B7/04 C03B7/07 C03B37/05 C03B37/08 C03B5/18 C03B5/187 C03B5/027 |
| A | EP 0 445 090 A (ROCKWOOL AB) 4 September 1991 * the whole document * | 1 | |
| A | US 4 337 073 A (W.W.DRUMMOND) 29 June 1982 * the whole document * | 1 | |
| A | DATABASE WPI Section Ch, Week 7410 Derwent Publications Ltd., London, GB; Class F01, AN 74-19024v XP002102892 -& SU 383 697 A (BELOUSOVA L S ET AL.) , 2 August 1973 * abstract * | 1 | |
| A | EP 0 722 907 A (OWENS-BROCKWAY GLASS CONTAINER INC.) 24 July 1996 * claims 1,8; figure 1 * | | TECHNICAL FIELDS SEARCHED (Int.Cl.6)<br><br>C03B |

The present search report has been drawn up for all claims

| Place of search | Date of completion of the search | Examiner |
|---|---|---|
| THE HAGUE | 17 May 1999 | Stroud, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

EP 1 013 616 A1

## ANNEX TO THE EUROPEAN SEARCH REPORT
## ON EUROPEAN PATENT APPLICATION NO.

EP 98 31 0563

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-1999

| Patent document cited in search report | | Publication date | Patent family member(s) | | Publication date |
|---|---|---|---|---|---|
| US 3589879 | A | 29-06-1971 | DE | 1923345 A | 19-11-1970 |
| | | | GB | 1218484 A | 06-01-1971 |
| EP 0445090 | A | 04-09-1991 | SE | 465673 B | 14-10-1991 |
| | | | SE | 9000734 A | 02-09-1991 |
| | | | US | 5094605 A | 10-03-1992 |
| US 4337073 | A | 29-06-1982 | NONE | | |
| EP 0722907 | A | 24-07-1996 | AU | 4036595 A | 25-07-1996 |
| | | | CA | 2164676 A | 19-07-1996 |
| | | | JP | 2863478 B | 03-03-1999 |
| | | | JP | 8277122 A | 22-10-1996 |
| | | | US | 5810900 A | 22-09-1998 |
| | | | US | 5776221 A | 07-07-1998 |
| | | | ZA | 9600404 A | 28-08-1996 |

EPO FORM P0459

For more details about this annex : see Official Journal of the European Patent Office, No. 12/82